# EUROPÄISCHE PATENTANMELDUNG

(11) **EP 1 519 547 A1**
(43) Veröffentlichungstag der Anmeldung: **30.03.2005**
(21) Anmeldenummer: 04103908.2
(22) Anmeldetag: 13.08.2004
(51) Int. Cl.: H04M 3/42, H04L 29/06

(54) **Verfahren zur Übertragung von Multimediadaten zwischen zumindest einer Kommunikationseinrichtung und zumindest einem Rechnersystem**

(30) Priorität: 26.09.2003 DE 10344772
(71) Anmelder: SIEMENS AKTIENGESELLSCHAFT, 80333 München (DE)
(72) Erfinder: Scholl, Gregor, 44265, Dortmund (DE)

(57) **Zusammenfassung**

Die Erfindung betrifft ein Verfahren zur Übertragung von Multimediadaten (2) zwischen zumindest einer Kommunikationseinrichtung (1.1 ... 1.x) und zumindest einem Rechnersystem (4.1 ... 4.x), wobei auf dem Rechnersystem (4.1 ... 4.x) mehrere Anwendungen, vorzugsweise TAPI-Anwendungen (9)(= Telefonieanwendungen), ausführbar sind und die Kommunikationseinrichtung (1.1 ... 1.x) und der Rechnersystem (4.1 ... 4.x) über ein Netzwerk (3) kommunizieren.

Das Verfahren zeichnet sich dadurch aus, dass die Multimediadaten (2) in Form von unbehandelten Rohdaten direkt an die Telefonieanwendungen (9) des Rechnersystems (1.1 ... 1.x) übertragen werden.

## Beschreibung

Verfahren zur Übertragung von Multimediadaten zwischen zumindest einer Kommunikationseinrichtung und zumindest einem Rechnersystem

Die Erfindung betrifft ein Verfahren zur Übertragung von Multimediadaten zwischen zumindest einer Kommunikationseinrichtung und zumindest einem Rechnersystem, wobei auf dem Rechnersystem mehrere Anwendungen, vorzugsweise TAPI-Anwendungen (= Telefonieanwendungen), ausführbar sind und die Kommunikationseinrichtung und das Rechnersystem über ein Netzwerk kommunizieren.

Die Integration beziehungsweise Kombination von Telefonieanwendungen in/mit Rechnersystemen - z.B. einem Personal Computer, PC - ist allgemein bekannt und wird in der Fachwelt auch mit "Computer Telephony Integration", CTI benannt.

Bei der CTI ist ein oder mehrere Rechnersysteme über ein paketorientieres Netzwerk, meist einem sogenannten Local Area Network, LAN mit einem oder mehreren Kommunikationseinrichtungen verbunden. Im Rechnersystem befindet sich zur Kommunikation beziehungsweise Datenübertragung zu den Telefonieanwendungen eine sogenannte TAPI-Schnittstelle (Telephony Application Programming Interface).

Mit TAPI in einer zweiten Version, TAPI 2.x, lassen sich Funktionen wie Gesprächsaufbau, Telefonkonferenzen oder Gesprächsweiterleitung ausführen, wobei mit Verwendung von TAPI 2.x Audiosignale wie z.B. Sprachsignale, mit Hilfe von sogenannten Wave-Devices in Audiodateien umgewandelt werden, die dann den Telefonieanwendungen zugeführt werden. Unter dem Begriff "Wave Devices" versteht man insbesondere virtuelle Geräte, die das Betriebssystem verwendet.

Damit VOIP-Anwendungen (VOIP = Voice over Internet Protocol), wie Voicemail und/oder Video-Streams, ausführbar sind, werden die benötigten Multimediadaten bisher mit einer TAPI in einer dritten Version, TAPI 3.x, übertragen. Bei TAPI 3.x werden die Daten über ein oder mehreren komplexen Schnittstellen - Interfaces - den Telefonieanwendungen zugeführt. Ab TAPI 3.x, also in einer dritten Version, kann nun neben den klassischen Telefondiensten auch der Datenbankzugriff und der Zugriff auf Audio- und Video-Streams ermöglicht werden.

Die Implementierung von TAPI 3.x bedeutet jedoch einen erhöhten Aufwand an Hardware und Software in mehreren Komponenten des Rechnersystems und ist somit gleichzeitig mit einer Kostenerhöhung des Gesamtsystems verbunden. Eine Kombination aus TAPI 2.x mit TAPI 3.x zur Einsparung von Kosten ist nicht möglich, da TAPI 2.x und TAPI 3.x nicht miteinander kompatibel sind.

Es ist daher Aufgabe der Erfindung, ein neues Verfahren zur Übertragung von Multimediadaten zwischen zumindest einer Kommunikationseinrichtung und zumindest einem Rechnersystem zu finden, welches gegenüber TAPI 3.x ohne zusätzliche komplexe Interfaces auskommt und die Multimediadaten mit Hilfe einer TAPI 2.x Schnittstelle den Telefonieanwendungen auf dem Rechnersystem zuführt, ohne dabei die Multimediadaten mit Hilfe von Wave-Devices umzuwandeln.

Die Aufgabe der Erfindung wird durch ein Verfahren mit den Merkmalen des Patentanspruches 1 gelöst. Vorteilhafte Weiterbildungen der Erfindung sind Gegenstand untergeordneter Patentansprüche.

Die Erfindung geht davon aus dass es nicht notwendig ist, wie bisher bei TAPI 2.x, die Multimediadaten mit Wave-Devices umzuwandeln und dass es auch nicht notwendig ist, wie bei TAPI 3.x, die Multimediadaten zuerst über Interfaces an die Telefonieanwendung zu leiten, wenn die Multimediadaten in Form unbehandelten Rohdaten direkt den Telefonieanwendungen zugeführt werden. Werden die Daten direkt an die Telefonieanwendungen übergeben, so kann hierfür auch eine TAPI 2.x Schnittstelle verwendet werden. Außerdem sind dann auch TAPI 2.x Anwendungen in der Lage, Multimediadaten zu verarbeiten.

Entsprechend diesen Überlegungen sieht das erfindungsgemäße Verfahren vor, zur Übertragung von Multimediadaten zwischen zumindest einer Kommunikationseinrichtung - z.B. einer öffentlichen und/oder privaten Vermittlungseinrichtung, auch PBX (Private Branch Exchange bzw. Public Branch Exchange), auch Telefonanlage genannt - und zumindest einem Rechnersystem - beispielsweise einem Personal Computer, PC - auf dem mehrere Anwendungen, vorzugsweise TAPI-Anwendungen (= Telefonieanwendungen), ausführbar sind, und wobei die Kommunikationseinrichtung und das Rechnersystem über ein paketorientiertes Netzwerk kommunizieren, dahingehend auszugestalten, dass die Multimediadaten in Form von unbehandelten Rohdaten direkt an die Telefonieanwendungen des Rechnersystems übertragen werden.

Durch dieses Verfahren wird eine Mediastreaming Funktionalität zur Verfügung gestellt, ohne dass ein TSP Treiber (TSP = Telephony service provider) und ein TAPI 3.x implementiert werden müssen.

Bisher erfolgte mit einer Implementierung von TAPI 2.x die Datenübertragung indirekt über eine Umwandlung der Multimediadaten durch Wave-Devices. Für TAPI 2.x Treiber ist es notwendig, die PBX-Multimediadaten so aufzubereiten, dass ein virtuelles Wave-Device die Daten zur Verfügung stellen kann. Dieses virtuelle Device ist ebenfalls in Form von Software so zu implementieren, dass es dem Standard des Betriebssystems, meistens dem Windows Standard, entspricht.

Auch für TAPI 3.x Treiber ist es notwendig, wie oben beschrieben, die Multimediadaten aufzubereiten. Hier muss der Telefonietreiber die Multimedia Interfaces direkt zur Verfügung stellen. Zusätzlich muss eine Anwendung diesen TAPI 3.x Interfaces genügen.

Es ist günstig, wenn zur Übertragung der Multimediadaten ein ESL-Interface (= Extended Services Line-Interface) verwendet wird. Das ESL-Interface ist eine TAPI Erweiterung über die herstellerspezifische Informationen, wie zum Beispiel Gebührencodes oder Tastenkombinationen der Endgeräte, austauschbar sind. Ein Austausch von Multimediadaten über das ESL-Interface fand bisher nicht statt.

Es ist weiterhin vorteilhaft, wenn zur Kommunikation zwischen der Kommunikationseinrichtung und dem Rechnersystem ein sogenanntes Local Area Netzwerk, LAN, verwendet wird. Durch die Verwendung eines derartigen paketorientierten Netzwerks sind auf einem Netzwerkbereich mit einer Ausdehnung von circa 10 Kilometer hohe Übertragungsraten von circa 10 GigaBit/Sekunde möglich.

Es ist weiterhin günstig, als Transportprotokoll für das LAN das TCP/IP Protokoll zu verwenden. Hierdurch kann der Implementierungsaufwand und der Platzaufwand reduziert werden und gleichzeitig verschiedene Dienste, wie Telnet, FTP und SMTP, die auf TCP/IP aufbauen, genutzt werden.

Als Multimediadaten kommen insbesondere Video- und/oder Voice-Streams in Betracht. Für das Verfahren ist es vorteilhaft, wenn die Multimediadaten mit IP-Sockets aus dem Netzwerk entnommen werden. Diese Daten werden dann mit der Extended Services Line den Anwendungen zugeführt, für die diese bestimmt sind.

Das Verfahren sieht vor, die Rohdaten der Kommunikationseinrichtung, so wie diese dem LAN entnommen werden, den TAPI-Anwendungen zuzuführen. Die Paketgröße kann hierbei bei circa 200 Byte liegen.

Ein Ausführungsbeispiel mit weiteren Vorteilen und Ausgestaltungen der Erfindung wird im folgenden anhand der Zeichnung näher erläutert.

Die einzige Figur zeigt im einzelnen:

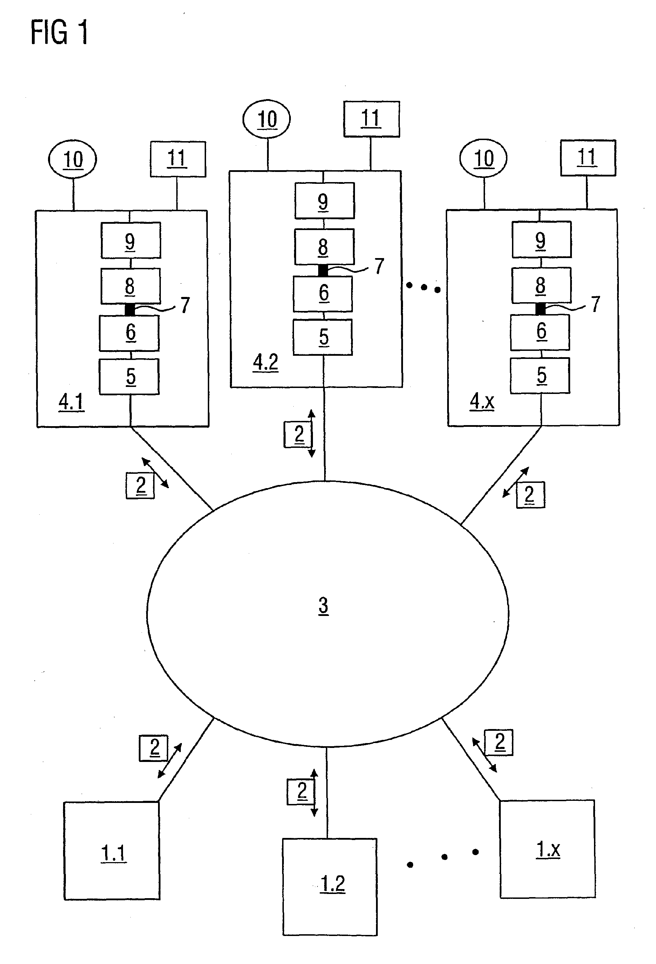

- Figur 1:: ein Strukturbild zur Darstellung des erfindungsgemäßen Verfahrens innerhalb eines Netzwerkes.

Fig. 1 zeigt ein Netzwerk 3, über das mehrere Computer 4.1 bis 4.x mit mehreren Kommunikationseinrichtungen 1.1 bis 1.x kommunizieren. Zwischen den Computern 4.1 bis 4.x und den Kommunikationseinrichtungen 1.1 bis 1.x sollen Multimediadaten zum Beispiel Voicemail, Video-Streams, ausgetauscht werden. Der Datenstrom der Multimediadaten wird durch den Doppelpfeil mit dem Bezugszeichen 2 symbolisiert. Durch das neue Verfahren sollen die Datenströme der Multimediadaten 2 den TAPI 2.x Anwendungen 9, die durch das Betriebssystem der Computer 4.1 bis 4.x ausgeführt werden, zugeführt werden. Die Multimediadaten, wie zum Beispiel Voicemail, Video-Streams, werden dann über Hardwarekomponenten der Computer 4.1 bis 4.x, wie Lautsprecher 10 und Monitor 11, für den Computeranwender hörbar und sichtbar gemacht. Es besteht aber auch die Möglichkeit, die Multimediadaten zu speichern.

Diesem Datenstrom 2 werden bei der Dateneinkopplung/Datenauskopplung 6 Datenpakte entnommen, die Mediainformationen, wie zum Beispiel Video und/oder Audio, enthalten. Diese Daten werden dann direkt an die Extended Services Lines 7 übergeben.

Durch die Extended Sercices Lines 7 werden die Multimediadaten den TAPI 2.x Anwendungen 9 signalisiert. Nun können die Multimediadaten von den Anwendungen in geeigneter Form bearbeitet werden.

Durch das Verfahren wird eine Mediastreaming Funktionalität zur Verfügung gestellt, ohne dass ein TSP für TAPI 3.x und TAPI 3.x Anwendungen auf den Computern 4.1 bis 4.x implementiert sein müssen.

Bisher ist zur Implementierung von TAPI immer ein sogenannter Telephony Service Provider, TSP, zugeordnet. TAPI ist die Schnittstelle, die die Plattform Windows für Anwendungsentwickler anbietet. Der TSP ist diejenige Softwarekomponente, die mit den Kommunikationseinrichtungen, PBX, kommuniziert. Die TSPs werden von den Anbietern der PBX zur Verfügung gestellt. Mit diesen TSPs wird mit der PBX kommuniziert und gleichzeitig ein Interface für TAPI zur Verfügung gestellt. Windows benutzt nach geeigneter Konfiguration diese TSPs. In TAPI werden die Informationen aller TSPs zu einem TAPI-Interface zusammengefasst, das für alle darunter liegenden Applikationen gleich ist.

Insgesamt wird durch die Erfindung ein Verfahren zur Verfügung gestellt, mit dem Multimediadaten unter Verwendung von TAPI 2.x zwischen zumindest einer Kommunikationseinrichtung und zumindest einem Rechnersystem übertragen werden können, ohne dabei Wave-Devices zu verwenden. Durch das neue Verfahren wird ebenfalls eine kostenintensive Implementierung von TAPI 3.x vermieden.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

Im Anmeldetext, der Figurenbeschreibung und den Patentansprüchen sind folgende Abkürzungen verwendet:
- CTI: Computer telephony integration
- FTP: File transfer protocol
- IP: Internet protocol = IP-Protokoll
- LAN: Local area network = Lokales Netz
- PBX: Private branch exchange
- SMTP: Simple mail transfer protocol
- TAPI: Telephony application programming interface = Schnittstelle
- TSP: Telephony service provider
- VOIP: Voice over IP

Außerdem wurde in der Figurenbeschreibung und den Patentansprüchen folgende Bezugszeichen gesetzt:
- 1.1 bis 1.x: Kommunikationseinrichtung 1 bis Kommunikationseinrichtung x
- 2: Datenströme mit Multimediadaten
- 3: Netzwerk
- 4.1 bis 4.x: Rechnersystem 1 bis Rechnersystem x
- 5: VOIP-Interface / Direct Show Filter
- 6: Dateneinkopplung/Datenauskopplung
- 7: Extended Services Line
- 8: TAPI 2.x Schnittstelle
- 9: TAPI 2.x Anwendung
- 10: Lautsprecher
- 11: Monitor

## Patentansprüche

1. Verfahren zur Übertragung von Multimediadaten (2) zwischen zumindest einer Kommunikationseinrichtung (1.1 ... 1.x) und zumindest einem Rechnersystem (4.1 ... 4.x), wobei auf dem Rechnersystem (4.1 ... 4.x) mehrere Anwendungen, vorzugsweise Telefonieanwendungen (9) ausführbar sind und die Kommunikationseinrichtung (1.1 ... 1.x) und das Rechnersystem (4.1 ... 4.x) über ein Netzwerk (3) kommunizieren,
**dadurch gekennzeichnet,**
**dass** die Multimediadaten (2) in Form von unbehandelten Rohdaten direkt an die Telefonieanwendungen (9) des Rechnersystems (4.1 ... 4.x) übertragen werden.

2. Verfahren nach Anspruch 1,
**dadurch gekennzeichnet,**
**dass** zur Übertragung der Multimediadaten (2) ein ESL-Interface (7) verwendet wird.

3. Verfahren nach einem der vorhergehenden Ansprüche,
**dadurch gekennzeichnet,**
**dass** zur Kommunikation zwischen der Kommunikationseinrichtung (1.1 ... 1.x) und dem Rechnersystem (4.1 ... 4.x) ein paketorientiertes Netzwerk verwendet wird.

4. Verfahren nach Anspruch 3,
**dadurch gekennzeichnet,**
**dass** das paketorientierte Netzwerk gemäß des TCP/IP-Protokolls betrieben wird.

5. Verfahren nach einem der vorhergehenden Ansprüche,
**dadurch gekennzeichnet,**
**dass** die Multimediadaten (2) zumindest Video- und/oder Voice-Streams verwenden.

6. Verfahren nach einem der vorhergehenden Ansprüche,
**dadurch gekennzeichnet,**
**dass** die Multimediadaten mit IP-Sockets aus dem Netzwerk (3) entnommen werden.

7. Verfahren nach einem der vorhergehenden Ansprüche,
**dadurch gekennzeichnet,**
**dass** den Multimediadaten (2) einzelne Datenpakete entnommen werden, und dann dem ESL-Interfaces (7) zur Verfügung gestellt werden.
